# EUROPÄISCHE PATENTANMELDUNG

(11) **EP 1 800 837 A2**
(43) Veröffentlichungstag der Anmeldung: **27.06.2007**
(21) Anmeldenummer: 06026124.5
(22) Anmeldetag: 16.12.2006
(51) Int. Cl.: B29C 65/08, B65B 51/22, B65B 43/60

(54) **Verfahren und Vorrichtung zum Verschweissen von Werkstücken**

(30) Priorität: 22.12.2005 DE 102005062137
(71) Anmelder: Haver & Boecker oHG, 59302 Oelde (DE)
(72) Erfinder: Vollenkemper, Willi, 59302 Oelde (DE)
(74) Vertreter: Schütte, Hartmut

(57) **Zusammenfassung**

Vorrichtung (10) und Verfahren mit einer Ultraschallschweißeinrichtung (14) zum Verschweißen von Werkstücken (13), wobei die Ultraschallschweißeinrichtung (14) einen Konverter, eine Sonotrode (16) und einen Amboss (17) umfasst, wobei die Sonotrode (16) zum Verschweißen in Richtung des Ambosses (17) schwingt und wobei die Sonotrode (16) um eine Achse (23) parallel zur Schwingungsrichtung (18) drehbar gelagert ist und sich beim Verschweißen dreht.

## Beschreibung

Die Erfindung betrifft eine Vorrichtung und ein Verfahren, bei der ein Verschweißen von Werkstücken erfolgt. Mit der Erfindung können z. B. mit thermoplastischen Materialien beschichtete Werkstücke verarbeitet werden. Bei einem bevorzugten Anwendungsfall erfolgt das Verschweißen von aus Folie bestehenden oder mit Folien beschichteten Säcken, insbesondere Ventilsäcken, nach dem Abfüllen von schüttfähigen Gütern, wie z. B. Baustoffen oder Granulaten.

Es sind im Stand der Technik unterschiedliche Füllmaschinen bekannt geworden, bei denen nach dem Befüllen der Säcke die Säcke verschlossen werden. Das Verschließen kann z. B. über ein Ultraschallschweißverfahren durchgeführt werden. Dazu werden die Folienlagen der beschichteten Ventile der Ventilsäcke in einer Ultraschallschweißeinrichtung miteinander verschweißt, so dass die Säcke dicht verschlossen werden. Die Ultraschallschweißeinrichtung umfasst eine Sonotrode und einen Amboss, die sich über die Breite des Ventils erstrecken und mittels derer die gesamte Breite des Ventils auf einmal verschweißt wird. Das Verfahren funktioniert bei feststehenden zu verschweißenden Werkstücken zuverlässig.

Bei Füllanlagen werden aber oft rotierende Maschinen mit mehreren Füllstutzen eingesetzt, bei denen nur eine Ultraschallschweißeinrichtung für die Verschweißung der Säcke der bis zu 8, 12 oder 16 Füllstutzen vorgesehen ist. Dadurch, dass nur eine Ultraschallschweißeinrichtung für die verschiedenen Säcke vorgesehen wird, kann ein erheblicher Aufwand eingespart werden. Nachteilig ist aber, dass bei einer ortsfesten Ultraschallschweißeinrichtung eine Relativgeschwindigkeit zwischen den zu verschweißenden Werkstücken und der Sonotrode und dem Amboss vorherrscht, wodurch die Sonotrode einem erheblich höheren Verschleiß unterliegt. Auf der Außenseite es Ventils können sich Produktpartikel absetzen, die z. B. im Falle von Baustoffen, wie Zement oder Sand zu einer erheblichen Reibung zwischen Sonotrode und Sack führen können, die zu einem erhöhten Verschleiß der Sonotrode führt.

Als Lösung dafür ist es mit der EP 1 010 619 A vorgeschlagen worden, unter Verwendung einer einzigen gemeinsamen Ultraschallschweißeinrichtung, diese einen Winkelabschnitt beim Verschweißvorgang synchron mit dem zugehörigen Füllstutzen mitdrehen zu lassen und anschließend wieder zurück zu fahren, um dann die Ultraschallschweißeinrichtung beim Verschweißen des nächsten Sacks wieder einen Winkelabschnitt synchron mit rotieren zu lassen. Dadurch wird eine Relativbewegung zwischen den zu verschweißenden Werkstücken und der Ultraschallschweißeinrichtung beim Schweißvorgang vermieden. Das Verfahren und die Vorrichtung hat sich als zuverlässig heraus gestellt, erfordert aber ein entsprechendes Gestänge und einen entsprechenden Antrieb, um die Ultraschallschweißeinrichtung in und gegen die Drehrichtung der Füllanlage zu verfahren.

Mit der EP 1 466 829 A1 ist eine weitere Anlage zum Füllen von Ventilsäcken bekannt geworden, bei der zum Verschweißen der Ventilsäcke ein Ultraschallschweißverfahren eingesetzt wird. Die Ultraschallschweißeinrichtung nach der EP 1 466 829 A1 ist ortsfest ausgeführt, so dass beim Verschweißen eine Relativbewegung zwischen Ultraschallschweißeinrichtung und den zu verschweißenden Säcken vorliegt. Dabei ist der Amboss als rotierend antreibbares Ambossrad ausgebildet und auf einer ortsfesten, rotierend antreibbaren Welle drehfest aufgesetzt. Obwohl das Ambossrad rotierend antreibbar ist, tritt bei dieser Ausgestaltung eine Relativbewegung zwischen einer Oberfläche der zu verschweißenden Werkstücke und der Sonotrode auf, so dass der Verschleiß der Sonotrode nicht vermindert wird.

In einer weiteren Ausgestaltung nach der EP 1 466 829 A1 ist auch die Sonotrode rotierbar vorgesehen. Dabei sind die Drehachsen von Sonotrode und Ambossrad parallel zueinander ausgerichtet. Die Schwingungsrichtung der Sonotrode ist parallel zur Ebene der zu verschweißenden Werkstücke und parallel zur Drehachse der Sonotrode. Die Hauptschwingungsachse zeigt an dem Amboss vorbei. Die Sonotrode schlägt nicht gegen den Amboss, sondern reibt an ihm. Nachteilig an dieser Ausgestaltung ist, dass die übertragbare Leistung zum Verschweißen nur gering ist. Eine zuverlässige Verschweißung kann deshalb nur bei geringer Durchsatzleistung gewährleistet werden.

Es ist deshalb die Aufgabe der vorliegenden Erfindung, eine weitere Vorrichtung und ein weiteres Verfahren mit einer Ultraschallschweißeinrichtung zur Verfügung zu stellen, bei der bzw. bei dem eine effektive Verschweißung der zu verschweißenden Werkstücke auch bei einer Relativbewegung zwischen Werkstück und Ultraschallschweißeinrichtung möglich ist.

Diese Aufgabe wird gelöst durch eine Vorrichtung mit den Merkmalen des Anspruchs 1 und durch ein Verfahren mit den Merkmalen des Anspruchs 14. Bevorzugte Weiterbildungen sind Gegenstand der Unteransprüche.

Die erfindungsgemäße Vorrichtung nach Anspruch 1 umfasst eine Ultraschallschweißeinrichtung zum Verschweißen von Werkstücken. Die Ultraschallschweißeinrichtung umfasst wenigstens einen Konverter, wenigstens eine Sonotrode und wenigstens einen Amboss. Die Sonotrode ist derart angeordnet, dass die Sonotrode zum Verschweißen in Richtung des Ambosses schwingt. Dabei ist die Sonotrode um eine Achse drehbar gelagert, die wenigstens im Wesentlichen parallel zur Schwingungsrichtung angeordnet ist, so dass sie sich bei der Relativbewegung von dem zu verschweißenden Werkstück und der Ultraschallschweißeinrichtung während des Verschweißens dreht.

Die Erfindung hat erhebliche Vorteile. Mit der Erfindung wird eine effektive und zuverlässige Verschweißung von sich bewegenden Werkstücken ermöglicht, bei denen beim Schweißvorgang eine Relativbewegung zur Ultraschallschweißeinrichtung vorliegt. Die Schwingung der Sonotrode in Richtung des Ambosses stellt eine effektive Kraftübertragung sicher.

Ein erheblicher Vorteil ist, dass der Verschleiß der Sonotrode verringert wird. Es wird die auftretende Reibung zwischen Sonotrode und Amboss reduziert, da sich die Sonotrode mit etwa der gleichen Umfangsgeschwindigkeit mitdreht und deshalb keine oder nur eine geringe Relativgeschwindigkeit im Schweißnahtbereich zwischen der Sonotrode und dem Sack vorherrscht.

Außerdem wird erfindungsgemäß die zur Verfügung stehende Kontaktfläche erhöht. Die Fläche, die verschleißen muss, bevor eine Sonotrode ausgetauscht werden muss, wird erheblich von dem kleinen Kontaktbereich im Stand der Technik auf den Umfangsring vergrößert. Der zum Schweißen verwendete Bereich ist in jedem Moment zwar auf einen kleinen Flächenabschnitt begrenzt, aber durch Verschleiß beansprucht wird ein Ring auf der Sonotrodenoberfläche.

Durch die Erfindung wird auch eine Faltenbildung in den Folienlagen verringert. Im Stand der Technik kann es bei einer Relativbewegung von Sonotrode und zu verschweißendem Werkstück zur Faltenbildung kommen, wenn z. B. eine doppelte Folienlage an der überlappenden Stelle in die Schweißeinrichtung eintritt, die bei einer gleitenden Sonotrode durch ein Festklemmen zu Unregelmäßigkeiten im Schweißverhalten führen kann.

Im Stand der Technik kann es durch ein durch Faltenbildung zusätzlich lokal noch dickeres Material beim Schweißen auch zu einer lokal schwächeren Schweißnaht kommen, da die Schweißenergie nicht auf die lokale Materialdicke angepasst ist. Solche Fälle werden durch die Erfindung erheblich reduziert, da durch die Drehung der Sonotrode um eine Achse parallel zur Schwingungsachse weitgehend solche Störungen beim Verschweißen verhindert werden, wie sie z. B. durch Faltenwurf hervorgerufen wird.

Ein weiterer Vorteil ist, dass durch die rotierende Sonotrode der Transport des Werkstücks durch die Schweißeinrichtung gewährleistet wird.

Die Vorrichtung kann insbesondere eine Packmaschine für Ventilsäcke umfassen. Die Vorrichtung kann aber auch im Bereich außerhalb von Packmaschinen eingesetzt werden.

Wenn die Vorrichtung eine Packmaschine umfasst, so ist diese insbesondere zum Abfüllen von schüttfähigen Gütern geeignet und vorgesehen, z. B. zum Abfüllen von Baustoffen, wie insbesondere Zement. Auch andere schüttfähige oder pulverförmige Güter oder Granulate können mit einer solchen Anlage abgefüllt werden. Die zu verschweißenden Werkstücke sind dann vorzugsweise Säcke und insbesondere Ventilsäcke. Bei Ventilsäcken sind insbesondere die Ventilbereiche mit thermoplastischen Folien versehen.

Die Ultraschallschweißeinrichtung ist vorzugsweise gegenüber einer Drehebene der Packmaschine im wesentlichen ortsfest angeordnet. Das bedeutet, dass die Ultraschallschweißeinrichtung sich nicht mitdreht, sondern immer im Wesentlichen an der gleichen Winkelposition verbleibt. Die Ultraschallschweißeinrichtung kann höhenverstellbar sein, um z. B. einen bei der ersten Umdrehung der Füllmaschine nicht vollständig gefüllten Sack vorbei drehen zu lassen und erst nach der nächsten Umdrehung zu verschweißen.

Insbesondere ist es bevorzugt, dass der Amboss drehbar angeordnet ist. Der Amboss kann als Ambossrad ausgebildet sein und auf einer rotierbar gelagerten Welle abgestützt sein. Die Ambosswelle kann antreibbar sein. Vorzugsweise wird die Drehung der Ambosswelle an die Vorschubgeschwindigkeit der zu verschweißenden Werkstücke angepasst.

In allen Ausgestaltungen ist die Sonotrode wenigstens im Kontaktbereich rotationssymmetrisch geformt und insbesondere radial ausgedehnt. Der Kontaktbereich ist vorzugsweise an der Spitze angeordnet. Die Spitze kann z. B. einen Durchmesser von etwa 40 bis 50 mm aufweisen, während der vom Kontaktpunkt weiter entfernte Bereich der Sonotrode einen erheblich größeren Durchmesser von z. B. 70 bis 80 mm aufweist.

Insbesondere ist ein Kontaktpunkt zwischen Sonotrode und Amboss an einem Punkt auf der Sonotrode, der radial von der zentralen Symmetrieachse beabstandet ist. Der Kontaktpunkt ist insbesondere in einem Randbereich der Sonotrodenspitze. Dadurch beschreiben die Kontaktpunkte nacheinander einen Kontaktkreis am Sonotrodenende, der um die Drehachse herum angeordnet ist.

Durch die Drehung der Sonotrode wird die Relativgeschwindigkeit zwischen Ultraschallschweißeinrichtung und Werkstück ausgeglichen. Die Drehgeschwindigkeit der Sonotrode wird deshalb an die Vorschubgeschwindigkeit derart angepasst, dass die Umfangsgeschwindigkeit des Kontaktpunktes der Vorschubgeschwindigkeit des Werkstückes entspricht. Im Falle einer rotierenden Füllanlage wird die Umfangsgeschwindigkeit des Sonotrodenkontaktpunkts an die Umfangsgeschwindigkeit des zu verschweißenden Sacks angepasst.

In bevorzugten Weiterbildungen kann die Sonotrode an der Spitze einen radial umlaufenden Ring oder Wulst aufweisen, der den Kontakt mit dem Amboss über das zu verschweißende Werkstück herstellt. Dadurch kann der Kontakt mit dem Werkstück auf den Ring beschränkt werden.

Die Drehachse steht in allen Fällen insbesondere senkrecht zur Vorschubrichtung der zu verschweißenden Werkstücke. In bestimmten bevorzugten Weiterbildungen steht die Drehachse der Sonotrode senkrecht zur Vorschubrichtung der zu verschweißenden Werkstücke und gleichzeitig unter einem Winkel zur Drehachse des Ambosses. Das bedeutet, dass die Sonotrode in einer Richtung nicht mehr senkrecht zum Amboss ausgerichtet ist, sondern dazu geneigt ist. Gleichzeitig ist aber eine Tangente an den Umfang der Sonotrode parallel zu der Transportrichtung der Folie ausgerichtet.

Der Winkel zwischen der Drehachse der Sonotrode und der Drehachse des Ambosses beträgt insbesondere wenigstens 30°, vorzugsweise 45° oder wenigstens 60°. Bei weiter senkrecht zueinander ausgerichteten Drehachsen ist die Kraftübertragung von der Sonotrode auf das Werkstück besser. Der Faktor ist proportional zu dem Kosinus des Winkels, so dass bei einem Winkel von etwa 30° ca. 50% übertragen werden und bei einem Winkel von 60° schon weit über 80 %. Vorzugsweise ist in diesen Ausgestaltungen die Sonotrodenspitze kegelförmig oder hohlkegelförmig oder kegelstumpfförmig ausgestaltet, wobei der Winkel des Kegels am den Winkel zwischen den beiden Drehachsen angepasst ist, um einen guten Kontakt zwischen Sonotrode, Werkstück und Amboss zu gewährleisten.

Vorzugsweise ist die Sonotrode an einem Schwingungsknoten drehbar gelagert. Zur Signalerzeugung ist vorzugsweise ein Generator vorgesehen.

In allen Fällen kann die Sonotrode wenigstens teilweise aus Titan bestehen. Die Sonotrode kann eine Beschichtung zur Erhöhung der Oberflächenhärte aufweisen.

Bei dem erfindungsgemäßen Verfahren werden Werkstücke verschweißt, wobei mit einem Generator einer Ultraschallschweißeinrichtung ein Ultraschallschwingungssignal erzeugt wird. Das Ultraschallschwingungssignal wird mittels eines Konverters und einer Sonotrode in eine Ultraschallschwingung umgewandelt. Zum Verschweißen schwingt die Sonotrode in Richtung eines Ambosses und wird dabei um eine Achse gedreht, die wenigstens im Wesentlichen parallel zur Schwingungsrichtung liegt.

In bevorzugten Ausgestaltungen des Verfahrens wird auch der Amboss beim Verschweißen gedreht. In allen Fällen können vor dem Verschweißen Ventilsäcke gefüllt werden. Das Verfahren kann an einer rotierenden Füllanlage eingesetzt werden, bei der Ventilsäcke gefüllt werden, die nach dem Befüllen verschlossen werden, indem die Öffnungen bzw. Ventile verschweißt werden.

Weitere Vorteile und Anwendungsmöglichkeiten ergeben sich aus dem Ausführungsbeispiel, das nun im Folgenden mit Bezug auf die Figuren beschrieben wird.

Darin zeigen:
- Fig. 1: eine stark schematische Darstellung einer rotierenden Packmaschine,
- Fig. 2: eine stark schematische Darstellung der Ultraschallschweißeinrichtung für eine Packmaschine nach der Erfindung in perspektivischer Ansicht,
- Fig. 3: die Ultraschallschweißeinrichtung nach Fig. 2 in einer Seitenansicht,
- Fig. 4: eine Sonotrode einer zweiten Ausführungsform einer Ultraschallschweißeinrichtung, und
- Fig. 5: eine dritte Ausführungsform einer Ultraschallschweißeinrichtung.

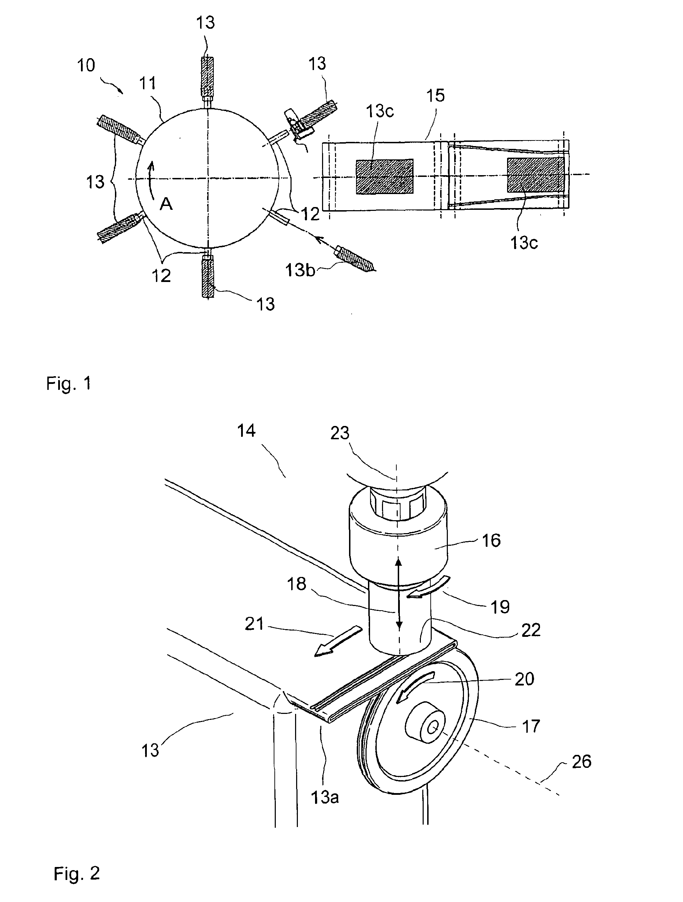

Mit Bezug auf die Figuren 1 bis 3 wird nun ein erstes Ausführungsbeispiel der Erfindung anhand einer rotierenden Packmaschine 10 beschrieben.

In Fig. 1 ist eine stark schematische Ansicht einer erfindungsgemäßen Packmaschine 10 dargestellt. Die Packmaschine ist drehbar und weist am Rotor 11 hier insgesamt sechs Füllstutzen 12 auf, mit denen gleichzeitig eine entsprechende Anzahl an Säcken 13 befüllt werden können. An einer Winkelposition ist ein Austrageband 15 vorgesehen, um die gefüllten und verschweißten Säcke 13c abzutransportieren. An einer weiteren Winkelposition kann ein Aufsteckautomat vorgesehen sein, der die leeren Säcke 13b auf die Füllstutzen 12 der Pack- bzw. Füllmaschine 10 aufsteckt.

Der Füllvorgang beim Füllen der Ventilsäcke 13 wird hier elektronisch gesteuert. Dazu wird mittels einer Bruttowaage das Füllgewicht des Sacks inkl. des Sackgewichts periodisch gemessen. Wenn das angestrebte Füllgewicht nahezu erreicht wird, wird der Füllstrom verlangsamt und schließlich gestoppt. Der gefüllte Sack 13 kann dann abgenommen werden. Um ein Austreten von Füllmaterial bei der Abnahme und dem weiteren Transport des Sacks 13 zu verhindern, wird das Ventil 13a des Sacks mit der Ultraschallschweißeinrichtung 14 während des Drehens in Drehrichtung A verschweißt.

Ein Ultraschallschweißverfahren ist insbesondere ein Verfahren zum Fügen von Kunststoffen, es können aber auch Metalle geschweißt werden. Wie bei allen anderen Schweißverfahren, muss an der Schweißstelle das Material durch Zuführen von Wärme aufgeschmolzen werden. Beim Ultraschallschweißen wird sie durch eine hochfrequente mechanische Schwingung erzeugt. Die zum Schweißen notwendige Wärme wird zwischen den zu verschweißenden Flächen des Werkstückes durch Molekular- und Grenzflächenreibung in den Flächen des Werkstückes erzeugt. Das Ultraschallschweißen gehört zur Gruppe des Reibschweißens.

Die zum Betrieb benötigte elektrische Leistung wird der Ultraschallschweißeinrichtung 14 über eine Anschlussleitung und einen Generator zugeführt. Der Generator erzeugt aus der Wechselspannung den benötigten hochfrequenten Wechselstrom mit einer Frequenz zwischen etwa 20 und 35 kHz.

Mittels einer piezoelektrischen Einrichtung, dem Konverter, wird das Wechselstromsignal in Schwingungen umgewandelt, die von der Sonotrode 16 aufgenommen und verstärkt werden. Die Schwingungsrichtung 18 liegt parallel zu der Richtung der Rotationsachse 23 der Sonotrode 16, die hier rotationssymmetrisch zur Rotationsachse 23 gestaltet ist. Hier im Ausführungsbeispiel weist die Sonotrode ein Gewicht zwischen etwa 3 kg und 7 kg, insbesondere etwa 5 kg auf. Die genauen Abmessungen und das Gewicht hängen von den konkreten Anforderungen ab.

Bei Verschweißen dreht sich die Sonotrode in Richtung des Pfeils 19 und der Amboss 17 dreht sich in in Richtung des Pfeils 20, während das Sackventil 13a durch die Ultraschallschweißeinrichtung 14 in Vorschubrichtung 21 durchläuft. In der Regel wird eine Doppelschweißnaht hergestellt. Durch die gleichgerichteten Umfangsgeschwindigkeiten der Kontaktpunkte 29 des Ambosses, des Kontaktpunktes 30 der Sonotrode sowie des Sackventils 13a werden Störungen beim Schweißen, wie z. B. durch eine Faltenbildung an den zu verschweißenden Folien vermieden.

Durch die erfindungsgemäße Konstruktion wird der Transport der Ventilsäcke durch die Ultraschallschweißeinrichtung zuverlässig gewährleistet.

Die rotationsymmetrisch ausgebildete Sonotrode weist im Kontaktbereich 22 einen Durchmesser von etwa 40 bis 50 mm auf, während der obere Bereich der Sonotrode einen Durchmesser von 70 bis 80 mm aufweist. Die Rotationsachse 23 der Sonotrode ist seitlich versetzt zur Drehebene des Ambosses 17. Der radiale Abstand 28 hängt von den jeweiligen Bedingungen ab, wird aber relativ groß gewählt, so dass bei mäßigen Drehzahlen der Sonotrode eine vernünftige Umfangsgeschwindigkeit und eine große Kontaktfläche erreicht wird.

Durch die vergrößerte Kontaktfläche wird die Standzeit erheblich verlängert, da nicht bei jeder Schwingung immer wieder die gleiche Stelle beansprucht wird. Der zum Schweißen verwendete Bereich ist in jedem Moment zwar auf einen kleinen Flächenabschnitt begrenzt, aber über der Zeit ergibt sich ein Ring auf der Sonotrodenoberfläche. Der Ring erstreckt sich um die zentrale Symmetrieachse 23 herum.

Die Umfangsgeschwindigkeit der Sonotrode 16 wird vorzugsweise auf die Drehgeschwindigkeit des Sackventils 13a an der Füllanlage 10 eingestellt. Es kann aber auch eine kleinere Umfangsgeschwindigkeit der Sonotrode 16 eingestellt werden, z. B. wenn die Drehzahl der Sonotrode 16 sonst ein zulässiges Maß überschreiten würde. Grundsätzlich ist es auf jeden Fall positiv, wenn die Relativgeschwindigkeit zwischen Sonotrode 16 und Sackventil 13a reduziert wird, selbst wenn noch eine geringe Relativgeschwindigkeit verbleibt.

Bei den weiteren Ausführungsbeispielen sind gleiche Teile und Komponenten mit gleichen Bezugszeichen versehen.

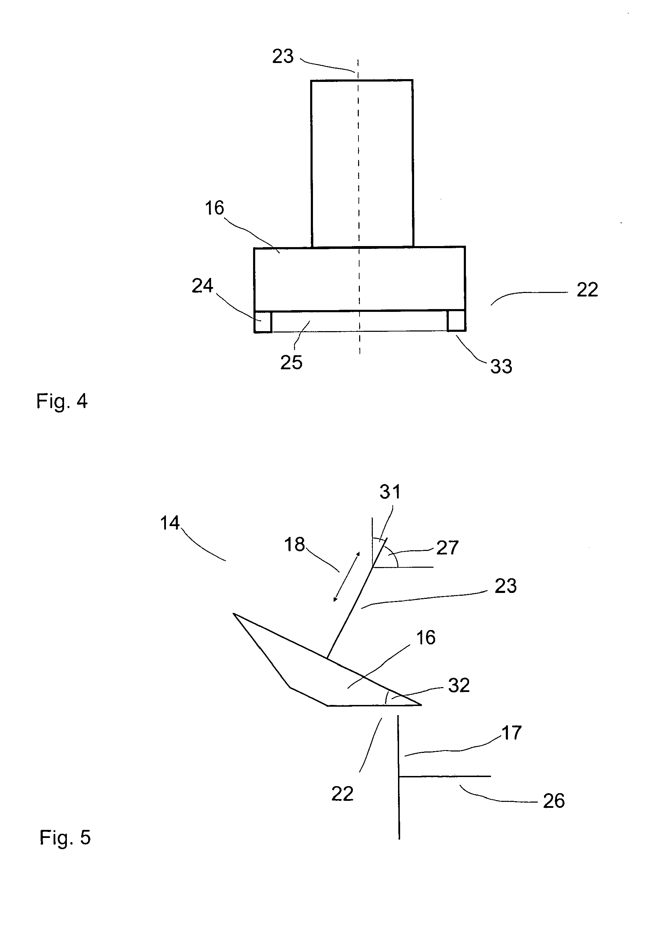

Die in Fig. 4 dargestellte Sonotrode 16 weist ein unterschiedliche Formgebung auf. Der Kontaktbereich 22 weist hier eine gegenüber dem weiter entfernten Bereich radial erheblich vergrößerte Ausdehnung auf. Dadurch steigt die Umfangsgeschwindigkeit im Kontaktbereich 22 bei gleicher Drehgeschwindigkeit an, so dass kleinere Drehgeschwindigkeiten ausreichen.

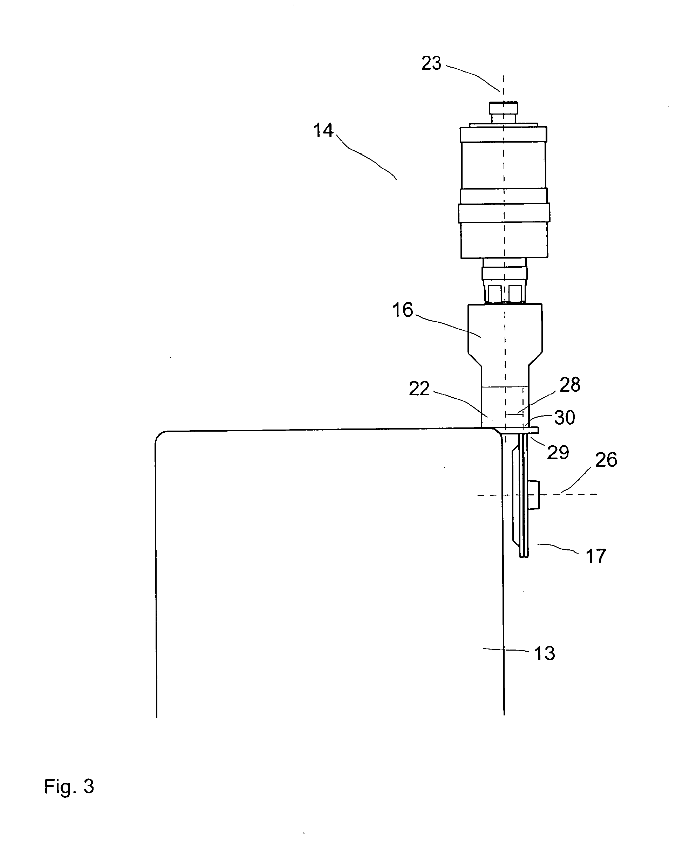

Weiterhin ist bei der Sonotrode nach Fig. 4 ein Ring bzw. Kontaktring 24 vorgesehen, der einen Hohlraum 25 umgibt. Die Sonotrode 16 erhält hier nur über den schmalen Ring 24 und den zu verschweißenden Ventilsack 13 Kontakt mit einem Amboss 17, der vorzugsweise entsprechend der Darstellungen in Fig. 2 und 3 ausgebildet ist.

Die Unterseite des Rings 24 bildet die Kontaktfläche 33 der Sonotrode mit dem zu verschweißenden Werkstück. Ein Austausch der Sonotrode 16 erfolgt, wenn die Sonotrode auf der Verschleiß- bzw. Kontaktfläche 33 verschlissen ist. Die Standzeit wird erhöht, da die ringförmige Kontaktfläche 33 erheblich größer ist, als die Kontaktfläche bei einer feststehenden Sonotrode. Das trifft auch bei den weiteren Ausgestaltungen nach Fig. 1 oder Fig. 5 zu.

Bei dem in Fig. 5 stark schematisch dargestellten Ausführungsbeispiel einer Ultraschallschweißeinrichtung 14 ist die Sonotrode 16 auch drehbar gelagert. Die Rotationsachse 23 ist hier aber nicht senkrecht zur Drehachse 26 des Ambosses 17 ausgerichtet, wie in den vorherigen Ausführungsbeispielen, sondern weist einen von 90° abweichenden Winkel 27 auf. Der Winkel 31 der Abweichung beträgt hier etwa 30°. Der Kontaktbereich 22 der Sonotrode 16 ist kegelstumpförmig gestaltet, wobei der Kegelstumpf einen Winkel 32 aufweist, der dem Winkel 31 der Winkelabweichung entspricht. Das bedeutet, dass der kegelstumpförmige Kontaktbereich 22 der Sonotrode 16 glatt auf dem Amboss bzw. den Ventilsäcken 13 abrollt. Eine Relativbewegung zwischen Sonotrode 16 und Sackventil 13a kann zuverlässig vermieden werden. Die etwas geringere eingebrachte Schweißleistung, da die Schwingungsrichtung nicht mehr senkrecht auf der zu verschweißenden Fläche steht, sondern unter dem Winkel 31 kann demgegenüber oftmals akzeptiert werden.

### Bezugszeichenliste:

- 10: Füllanlage
- 11: Rotor
- 12: Füllrohr
- 13: Ventilsack
- 13a: Ventil
- 13b: leerer Ventilsack
- 13c: verschweißter Ventilsack
- 14: Ultraschallschweißeinrichtung
- 15: Austrageband
- 16: Sonotrode
- 17: Amboss
- 18: Schwingungsrichtung
- 19: Drehrichtung
- 20: Drehrichtung
- 21: Vorschubrichtung
- 22: Kontaktbereich
- 23: Rotationsachse
- 24: Ring
- 25: Hohlraum
- 26: Drehachse
- 27: Winkel
- 28: radialer Abstand
- 29: Kontaktpunkt
- 30: Kontaktpunkt
- 31: Winkel
- 32: Winkel
- 33: Kontaktfläche

## Patentansprüche

1. Vorrichtung (10) mit einer Ultraschallschweißeinrichtung (14) zum Verschweißen von Werkstücken (13), wobei die Ultraschallschweißeinrichtung (14) einen Konverter und wenigstens eine Sonotrode (16) und wenigstens einen Amboss (17) umfasst, wobei die Sonotrode (16) zum Verschweißen in Richtung des Ambosses (17) schwingt und wobei die Sonotrode (16) um eine Achse (23) parallel zur Schwingungsrichtung (18) drehbar gelagert ist und sich beim Verschweißen dreht.

2. Vorrichtung nach Anspruch 1, welche eine Packmaschine (10) für Ventilsäcke (13) umfasst, welche vorzugsweise mehrere Füllstutzen (12) umfasst.

3. Vorrichtung nach dem vorhergehenden Anspruch, wobei die Packmaschine (10) rotierbar ist und die Ultraschallschweißeinrichtung (14) gegenüber einer Drehebene der Packmaschine (10) im wesentlichen ortsfest angeordnet ist.

4. Vorrichtung nach mindestens einem der vorhergehenden Ansprüche, wobei die Ultraschallschweißeinrichtung (14) höhenverstellbar ist.

5. Vorrichtung nach mindestens einem der vorhergehenden Ansprüche, wobei der Amboss (17) drehbar angeordnet ist.

6. Vorrichtung nach mindestens einem der vorhergehenden Ansprüche, wobei die Sonotrode (16) wenigstens teilweise rotationssymmetrisch geformt und im Kontaktbereich (22) radial ausgedehnt ist und vorzugsweise im Kontaktbereich (22) einen radial umlaufenden Ring (24) oder Wulst aufweist.

7. Vorrichtung nach mindestens einem der vorhergehenden Ansprüche, wobei die Drehgeschwindigkeit der Sonotrode (16) an die Vorschubgeschwindigkeit (21) des zu verschweißenden Werkstücks (13) angepasst ist.

8. Vorrichtung nach mindestens einem der vorhergehenden Ansprüche, wobei die Drehachse (23) der Sonotrode (16) unter einem Winkel (32) zur Drehachse (26) des Ambosses (17) steht.

9. Vorrichtung nach mindestens einem der vorhergehenden Ansprüche, wobei der Winkel (27) zwischen der Drehachse (23) der Sonotrode (16) und der Drehachse (26) des Ambosses (17) wenigstens 30° beträgt.

10. Vorrichtung nach mindestens einem der vorhergehenden Ansprüche, wobei eine Tangente an den Umfang der Sonotrode (16) parallel zu der Transportrichtung (21) des Werkstücks (13) ausgerichtet ist.

11. Vorrichtung nach mindestens einem der vorhergehenden Ansprüche, wobei die Sonotrode (16) an einem Schwingungsknoten drehbar gelagert ist.

12. Vorrichtung nach mindestens einem der vorhergehenden Ansprüche, wobei die Sonotrode (16) wenigstens teilweise aus Titan besteht.

13. Vorrichtung nach mindestens einem der vorhergehenden Ansprüche, wobei die Sonotrode (16) eine Beschichtung aufweist.

14. Verfahren zum Verschweißen von Werkstücken (13), wobei ein Ultraschallschwingungssignal mittels eines Konverters und einer Sonotrode (16) einer Ultraschallschweißeinrichtung (14) in eine Ultraschallschwingung umgewandelt wird, wobei die Sonotrode (16) zum Verschweißen in Richtung eines Ambosses (17) schwingt, und sich beim Verschweißen um eine Achse (23) parallel zur Schwingungsrichtung (18) dreht.

15. Verfahren nach dem vorhergehenden Anspruch, wobei sich auch der Amboss (17) beim Verschweißen dreht.

16. Verfahren nach mindestens einem der Ansprüche 14 oder 15, wobei vor dem Verschweißen Ventilsäcke gefüllt werden.

17. Verfahren nach mindestens einem der Ansprüche 14 bis 16, wobei die Ventilsäcke (13) mit einer rotierenden Füllanlage (10) gefüllt werden, an der eine Ultraschallschweißeinrichtung (14) für Ventilsäcke (13) vorgesehen ist.
